# EUROPÄISCHE PATENTSCHRIFT

(11) **EP 1 420 136 B1**
(45) Veröffentlichungstag und Bekanntmachung des Hinweises auf die Patenterteilung: **19.12.2007**
(21) Anmeldenummer: 03019812.1
(22) Anmeldetag: 30.08.2003
(51) Int. Cl.: E05C 9/00, E05C 1/06, E05C 7/04, B23P 21/00

(54) **Treibstangenbeschlag für einen unterschlagenden Flügel eines zweiflügeligen, setzholzlosen Fensters oder einer Tür, und Verfahren zur automatischen oder teilautomatischen Montage eines Treibstangenbeschlags**
Espagnolette for the semi-fixed wing of a double-window or -door without central mullion , and a method for automated or semi-automated assembling of an espagnolette
Crémone pour le battant semi-fixe d'une fenêtre ou porte à deux battants sans montant central, et procédé de montage automatique ou semi-automatique d'une crémone

(30) Priorität: 12.11.2002 DE 10252884
(43) Veröffentlichungstag der Anmeldung: 19.05.2004
(73) Patentinhaber: SIEGENIA-AUBI KG, 57234 Wilnsdorf (DE)
(72) Erfinder: Gersdorf, Oliver, 57587 Birken Honigsessen (DE); Geffert, Ansgar, 31141 Hildesheim (DE); Otto, Erich, 57299 Burbach (DE); Rotger Steigemann, Carmen, 57078 Siegen (DE); Sassmannshausen, Jürgen, 57271 Hilchenbach (DE); Stünn, Christoph, 57290 Neunkirchen (DE)

(56) Entgegenhaltungen:
- EP-A1- 0 786 574
- AT-B- 379 850
- DE-A1- 3 504 025
- DE-C1- 19 625 098

## Beschreibung

Die Erfindung betrifft einen Treibstangenbeschlag für einen unterschlagenden Flügel eines zweiflügeligen, setzholzlosen Fensters oder Tür mit einem Treibstangenantrieb, nach dem Oberbegriff des Patentanspruchs 1 sowie ein Verfahren zur automatischen oder teilautomatischen Montage eines Treibstangenbeschlags nach dem Oberbegriff des Patentanspruchs 11.

Aus der DE 196 25 098 C1 geht eine Verschlussvorrichtung der eingangs genannten Art hervor. Dabei weist die Verschlussvorrichtung einen Grundkörper auf, der mindestens ein Langloch aufweist, in dem ein Kupplungszapfen für die zugehörige Treibstange längsverschieblich geführt ist, wobei der Kupplungszapfen mit einem ersten Hebel eines Spreizgetriebes verbunden ist, dass einen weiteren zweiten Hebel aufweist, der an dem Grundkörper geführt ist und wobei die beiden Hebel um eine Schwenkachse schwenkbeweglich miteinander gekuppelt sind. Dabei ist die Verschlussvorrichtung im Flügelfalz untergebracht, so dass sie bei geschlossenem Fenster nicht sichtbar ist, d.h., sie wird von dem überschlagenden Flügel abgedeckt. Wird der überschlagende Flügel geöffnet, so wird die Verschlussvorrichtung zugänglich und kann manuell in Offenstellung gebracht werden, so dass die Treibstange bzw. die Treibstangen den unterschlagenden Flügel freigeben. Dieser lässt sich dann ebenfalls Öffnen.

Die Verlagerung der Verschlussvorrichtung in die Öffnungsstellung erfolgt vorzugsweise dadurch, dass der Benutzer einen Handhabungsabschnitt eines der Hebel ergreift und diesen verschwenkt, wodurch er aus dem Falzbereich schwenkt und "winkerartig" vorsteht. Das Verschwenken des Hebels hat die Verlagerung des Kupplungszapfens zur Folge. Außerdem wird dabei vorgesehen, dass das Langloch des Grundkörpers in Form eines Schlüssellochs ausgebildet ist und einen Langlochabschnitt sowie einen den Kupplungszapfen freigegebenen Kreislochabschnitt aufweist. Durch das Einfügen des Kupplungszapfens in den Kreislochabschnitt und das Herausziehen des Kupplungszapfens in Zapfenlängsrichtung aus dem Kreislochabschnitt ist es möglich, Grundkörper und Hebel voneinander auf einfache Weise zu trennen. Um den Hebel von dem Grundkörper zu trennen, wird das Spreizgetriebe in Öffnungsstellung verbracht und noch ein Teilstück darüber hinaus bewegt, so dass der Haltekragen in den Bereich des Kreislochabschnitts des Schlüssellochs gelangt, wodurch ein axiales Herausziehen des mit dem zugehörigen Hebel fest verbundenen Kupplungszapfen möglich ist. Hierzu ist der Durchmesser des Kreislochabschnitts größer bemessen, als der Durchmesser des auf dem Kupplungszapfen angeordneten Haltekragens.
Die hier bekannte Verschlussvorrichtung besteht aus relativ vielen Einzelteilkomponenten, die den Zeitaufwand einer Montage für einen Treibstangenbeschlag erhöhen, was sich nachhaltig auf die Montagekosten auswirkt.

Aus der DE 35 04 025 A1 geht eine Verschlussvorrichtung der eingangs genannten Art hervor, die dazu dient, den unterschlagenden Flügel zweiflügeliger, keinen Mittelholm aufweisender Fenster oder Türen für sich zu verriegeln. Dies erfolgt durch die manuelle Betätigung der Verschlussvorrichtung, die mittels mindestens eines Kupplungszapfens eine zugehörige Treibstange in Verriegelungsstellung bewegt. Vorzugsweise sind zwei Treibstangen vorhanden, die mittels der Verschlussvorrichtung eine gegenläufige Bewegung durchführen, wodurch der unterschlagende Flügel sowohl oben als auch unten festgelegt wird. Die Verschlussvorrichtung ist im Flügelfalz untergebracht, so dass sie beim verschlossenen Fenster nicht sichtbar ist, d.h., sie wird bei dem unterschlagenden Flügel abgedeckt. Wird der überschlagende Flügel geöffnet, so wird die Verschlussvorrichtung zugänglich und kann manuell in Offenstellung gebracht werden, so dass die Treibstange bzw. die Treibstangen den unterschlagenden Flügel freigeben. Dieser lässt sich dann ebenfalls öffnen. Die Montage der Verschlussvorrichtung erfolgt über das Einlegen der Kupplungszapfen in die dafür vorgesehenen Bohrungen der Treibstange, wobei die Verschlussvorrichtung abschließend mit Befestigungsschrauben an den Treibstangenbeschlag gegen Herausfallen gesichert wird. Durch die Trennung der Verschlussvorrichtung zum Treibstangenbeschlag ist ein zusätzlicher Montagearbeitsgang notwendig, da die Verschlussvorrichtung ein weiteres Bauteil zum Treibstangenbeschlag bildet.

Die bekannten Verschlussvorrichtungen werden üblicherweise in den unterschlagenen Flügel in Verschlussstellung eingebaut.
Ausgehend davon ist es erforderlich, das alle Bauteile des Treibstangenbeschlags die Verschlussposition einnehmen, um ein Kuppeln mit der Verschlussvorrichtung zu gewährleisten.
Alle Bauteile, die für den unterschlagenen Flügel mit Ausnahme der Verschlussvorrichtung verwendet werden, sind Bauteile, die auch in den überschlagenen Fensterflügel ihren Einsatz finden. Um eine präzise und einfache Montage auch im Hinblick auf eine teilautomatische bzw. automatische Montage zu ermöglichen, sind alle Bauteile des Treibstangenbeschlags mittenfixiert. D. h., das üblicherweise die Bauteile für den unterschlagenen Flügel vor Montage entfixiert werden müssen und anstelle in Drehstellung in Verschlussstellung montiert werden, um dann schließlich mit der Verschlussvorrichtung kuppeln zu können.
Eine andere Variante mittenfixierte Bauteile in den unterschlagenen Fensterflügel zu montieren und in ihrem fixierten Zustand zu belassen, ergibt sich sowohl aus der DE 35 04 025 A1 als auch aus der DE 196 25 098 C1, wenn man die nicht mittenfixierte Verschlussvorrichtung in ausgeschwenkter "winkerartigen " Lage des Betätigungshebels in den unterschlagenen Flügel montiert und mit den fixierten Bauteilen kuppelt.
Aufwendig wird diese Art der Variante, wenn es darum geht, die Montage zu automatisieren.
Um die automatische Montage mit den bekannten Bauteilen zu realisieren, ist es erforderlich, den in ausgeschwenkter Lage befindlichen Betätigungshebel zu fixieren und/ oder in dieser Lage befindlichen Betätigungshebel in einer speziellen Aufnahme zu halten.
Außerdem erweist sich der Aufwand für die Verpackung und für die Magazinierung eines mittenfixiert in ausgeschwenkter Lage positionierten Betätigungshebels als sehr groß, da einerseits mehr Verpackungsraum benötigt wird und andererseits eine gesicherte Lage gefordert ist, um ein vorzeitiges Brechen der Mittenfixierung zu unterbinden, was sehr kostenaufwendig wäre.
Unter anderem besteht die Möglichkeit die Aufnahme für den Betätigungshebel so zu konzipieren, dass der Betätigungshebel auch ohne Mittenfixierung in ausgeschwenkter Lage eingebaut werden kann. Hierzu müsste die Montageaufnahme ein festes Positioniermittel aufweisen, die den Betätigungshebel in ausgeschwenkter Lage hält, wobei sich der Aufwand ebenfalls in den Kosten wiederspiegeln würde.

Der Erfindung liegt demnach die Aufgabe zugrunde, einen Treibstangenbeschlag für einen unterschlagenden Flügel eines zweiflügeligen, setzholzlosen Fensters oder Tür bereit zu stellen, der einen montagefreundlichen, insbesondere automatisierten Anschlag erlaubt, sowie ein Verfahren zur automatischen oder teilautomatischen Montage eines solchen Treibstangenbeschlags anzugeben.

Die erfindungsgemäße Lösung der Aufgabe wird durch die Merkmale des kennzeichnenden Teils des Patentanspruchs 1 und dem anhängenden Verfahrensanspruch 11 gelöst. Die Unteransprüche beziehen sich auf weitere vorteilhafte Ausgestaltungen der Erfindung.

Der in Montageposition, d.h., in der Beschlagaufnahmenut angeordnete mittenfixierte Treibstangenbeschlag, der sich im wesentlichen aus den Bauteilen wie auch aus dem Treibstangenbeschlag des überschlagenen Fensterflügels zusammensetzt, wird über den ebenfalls mittenfixierten Treibstangenantrieb durch Betätigung des in Verschlussstellung befindlichen Betätigungshebels aus dem Falzbereich in die Öffnungsstellung verschwenkt, so dass er winkelartig vorsteht. Sobald die Drehbereitschaftsstellung des Treibstangenantriebs eingenommen ist, kuppelt der mit dem Betätigungshebel in einer formschlüssigen und/oder kraftschlüssigen Verbindung stehende Kupplungszapfen in die Mitnahmeverbindung der Treibstange selbsttätig ein.

Ebenso besteht die Möglichkeit, dass der mit dem Betätigungshebel in formschlüssiger und/ oder kraftschlüssiger Verbindung stehende Kupplungszapfen mit der Stulpschiene steht und der mit dem Lenker fest verbundene Kupplungszapfen ein Langloch von der Stulpschiene führend durchgreift und in eine Mitnahmeverbindung der Treibstange selbsttätig, bei Betätigung des Betätigungshebels in Richtung Öffnungsstellung, einkuppelt.

Besonders vorteilhaft dabei ist, dass aufgrund einer derartigen Ausgestaltung des Treibstangenantriebs alle Treibstangenbeschlagbauteile des zweiflügeligen Fensters oder Tür in mittenfixierter Position in die Beschlagaufnahmenut eingebaut werden können, d.h., das der überschlagene Fensterflügel als auch der unterschlagene Fensterflügel entsprechend mit gleichen Bauteilen und ohne eine vorzeitige Entfixierung der Mittenfixierung vorzunehmen zu müssen, in die jeweilige Beschlagaufnahmenut komplettiert werden kann.

Im Vorstehenden wurde bisher beim Erfindungsgegenstand nur auf einen Kupplungszapfen für eine Treibstange eingegangen. Bei einer derartigen Konstruktion kann somit die Erfindung realisiert sein. Sie eignet sich jedoch auch für Treibstangenantriebe, die gegenläufig verlagerbare Kupplungszapfen aufweisen, die jeweils von dem Betätigungshebel und von dem Lenker des Treibstangenantriebs bewegt werden und auf diese Art und Weise die dazu gehörigen Treibstangen gegenläufig mitnehmen. In sofern gelten die Ausführungen dieser Erfindung sowohl für Treibstangenbeschläge mit einer oder aber auch mit zwei Treibstangen.

Eine einfache, weil zweckmäßige Ausgestaltung sieht vor, dass die Mitnahmeverbindung der Treibstange als Bohrung ausgelegt ist. Damit erweist sich die Kupplungsverbindung aufgrund der einfachen Herstellung der Bohrung -beispielsweise durch Ausstanzen- und auch der Kupplungszapfen, der als Drehteil oder Kaltfließpressteil hergestellt werden kann, als relativ kostengünstig.

Des weiteren sieht eine Vorteilhafte Ausgestaltung der Erfindung vor, dass der Betätigungshebel beim ersten Verschwenken nach der Montage des Treibstangenbeschlags in die Drehbereitschaftsstellung einen Leerhub ausführt. Alle weiteren Treibstangenbeschlagbauteile des unterschlagenen Flügels insbesondere auch die des Treibstangenantriebs an dem der Betätigungshebel beispielsweise durch Vernieten über dem Lenker an der Stulpschiene angebunden ist sowie die Treibstange, bleiben bei diesem Vorgang in einer nicht verlagerten mittenfixierten Position.

Eine besonders vorteilhafte und einfache Ausgestaltung sieht vor, dass der Kupplungszapfen in der Außereingriffposition auf der zur Stulpschiene zugewandten Seite der Treibstange angeordnet ist.
In dieser Position befindet sich sowohl der Treibstangenbeschlag als auch der Treibstangenantrieb in einem unbetätigten Zustand, der im Zuge einer ersten Verlagerung durch Betätigung des Betätigungshebels von der Verschlussstellung bis in die Drehbereitschaftsstellung unverändert bleibt, wobei erst ab Drehbereitschaftsendstellung der Kupplungszapfen in die Mitnahmeverbindung der Treibstange selbsttätig einkuppelt. Die Treibstange wird während dieses Schaltvorganges entgegen der Stulpschiene in Richtung Nutgrund durch den Kupplungszapfen gedrückt.

Damit wird bevorteilt, dass der Betätigungshebel in der in außer Eingriff befindlichen Position des Kupplungszapfens federkraftbeaufschlagt ist. Somit bedarf das selbsttätige Einkuppeln des Kupplungszapfens in die Mitnahmeverbindung der Treibstange keinen weiteren konstruktiven Aufwand. Darüber hinaus lässt sich über die Länge des Kupplungszapfens die Federwirkung zum selbstständigen Kuppeln in die Mitnahmeverbindung der Treibstange beeinflussen. Außerdem wird die Federwirkung über die freie Länge der Treibstange in einer Führungsverbindung der Stulpschiene bestimmt. Nicht außer Acht zu lassen ist aber auch dabei die Reibung zwischen der Treibstange und dem Kupplungszapfen und damit die Schwergängigkeit, die über die vorgenannten Kriterien ebenfalls beeinflusst werden kann.

Vorteilhaft ist nach einem weiteren Merkmal der Erfindung, dass beim ersten Schließen des Betätigungshebels aus der Drehbereitschaftsstellung in die Verschlussstellung, die Treibstange des Treibstangenbeschlags betätigbar ist und damit die Mittenfixierung des Treibstangenbeschlags löst. Nach diesem Schaltvorgang ist der Treibstangenbeschlag des Stulpflügels wie aus dem Stand der Technik bekannt, über den Treibstangenantrieb betätigbar.

Nach einem weiteren Merkmal der Erfindung weist der Kupplungszapfen an dem zur Treibstange offenen Ende einen Kopf auf.
Der Kopf erweist sich insofern als besonders zweckmäßig, dass er ein ungewolltes Entkuppeln im gekuppelten Zustand zwischen Kupplungszapfen und Treibstange verhindert.
So übergreift der Kopfüberstand des Kopfes bei Betätigung des Betätigungsantriebs über den Betätigungshebel im gekuppelten Zustand die Treibstange auf der zur Stulpschienen abgewandten Seite und sichert den Kupplungszapfen gegen ungewolltes Entkuppeln über eine formschlüssige Verbindung.
Im unbetätigten Zustand ist der Kupplungszapfen von der Treibstange in jeder beliebigen Position wieder entkuppelbar.

Besonders vorteilhaft ist, wenn der Kupplungszapfen an der zur Treibstange offenen Ende weisenden Kante des Kopfes entgratet oder abgerundet ist, um jegliche Reibflächen die eine Schwergängigkeit bei der ersten Betätigung des Betätigungshebels in außer Eingriffposition des Kupplungszapfens zu vermeiden.

Ein weiteres Merkmal der Erfindung ist, dass der Betätigungshebel des Treibstangenantrieb zum lösen der Verriegelung des Treibstangenbeschlags von den Rahmenbauteilen nach dem zweiten Schaltvorgang um die Schwenkachse in ein freies Betätigungsfeld der Drehbereitschaftsstellung verschwenkbar ist.
Der nach dem ersten Schaltvorgang wieder in Verschlussstellung befindliche Betätigungshebel steht mit der Treibstange des Treibstangenantriebs über den in einer festen Verbindung mit dem Betätigungshebel stehenden Kupplungszapfen zumindest in einer formschlüssigen Verbindung zueinander, so dass der zweite Schaltvorgang durch ein ausschwenken des Betätigungshebels von dem unterschlagenen Fensterflügel weg die bereits aus dem Stand der Technik bekannte Entriegelung der Riegelorgane des Treibstangenbeschlags zu den Rahmenbauteilen vornehmen kann.

Schließlich wird durch das in Anspruch 11 angegebene Verfahren eine erfindungsgemäße vereinfachte Montage des Fensters oder der Tür entsprechend den Merkmalen des Anspruchs 1 möglich. Von besonderem Vorteil ist dabei die Verwendung von mittenfixierten Treibstangenbeschlagbauteilen, die bereits wie aus dem Stand der Technik bekannt, in dem überschlagenen Fensterflügel eines zweiflügeligen Fensters ihren Einsatz finden, wobei der unterschlagene Fensterflügel ohne zusätzliche nicht bekannte Handhabungen ebenfalls mit mittenfixierten Treibstangenbeschlagbauteilen montiert werden kann.

Erfindungsgemäß werden die Rahmenbauteile bei einheitlichem Sitz für den unterschlagenden Flügel und für den überschlagenen Fensterflügel angeschlagen.

Entscheidend für das erfindungsgemäße Verfahren ist, dass der Treibstangenantrieb ebenfalls mittenfixiert ist und dass der Betätigungshebel des Treibstangenantriebs in Verschlussstellung in einer kongruenten Lage zur Stulpschiene angeordnet ist und sich dabei in einer Außereingriffposition mit der Treibstange des Treibstangenantriebs befindet und bei einer ersten Betätigung des Betätigungshebels in Richtung Drehbereitschaftsstellung über einen Leerhub, somit also entkuppelt von der Treibstange ist und schließlich in ausgeschwenkter Endlage der Drehbereitschaftsstellung mittels eines Kupplungszapfens des Betätigungshebels selbsttätig mit der Treibstange kuppelt und beim erstmaligen Schließen des Betätigungshebels in Richtung Verschlussstellung die Mittenfixierung des Treibstangenbeschlags aufhebt. Besonderes hervorzuheben ist dabei, dass in ausgeschwenkter Endlage der Kupplungszapfen federkraftbeaufschlagt durch die Eigenelastizität der Treibstange des Treibstangenbeschlags mit der Treibstange kuppelt.

Zweckmäßig und hilfreich ist es in jedem Falle, dass die Montage der Beschlagelemente sowohl für den überschlagenen Fensterflügel als auch für den unterschlagenen Fensterflügel automatisiert erfolgen kann, wobei die Beschlagelemente im Magazin oder ähnlichem bevorratet sind und automatisch zugeführt werden können.

Weitere Vorteile ergeben sich aus der folgenden Zeichnungsbeschreibung. In der Zeichnung sind Ausführungsbeispiele der Erfindung dargestellt.

Es zeigen:
- Fig. 1: eine Ansicht auf ein zweiflügeliges Fenster, wobei der unterschlagene Flügel mit einem Treibstangenantrieb versehen ist,
- Fig. 2a: der Treibstangenantrieb in einem Längsschnitt in einer Außereingriffposition des Betätigungshebels mit der Treibstange,
- Fig. 2b: eine Draufsicht des Treibstangenantriebs gemäß der Fig. 2a,
- Fig. 3: eine perspektivische Darstellung des Treibstangenantriebs in drehgeöffneter Endstellung.

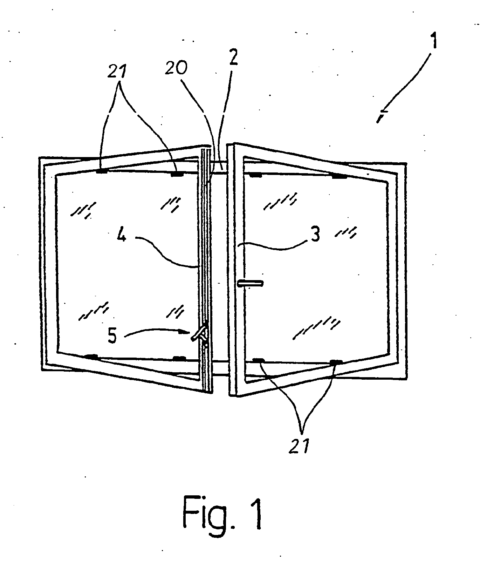

Die Fig. 1 zeigt ein Fenster 1, dass einen feststehenden Fensterrahmen 2 und zwei Fensterflügel 3 und 4 aufweist. Der Fensterflügel 3 ist ein überschlagender Flügel; der Fensterflügel 4 ist als unterschlagender Flügel ausgebildet. Zum Schließen des Fensters 1 wird zunächst der Fensterflügel 4 in Verschlussstellung gebracht und anschließend erfolgt das Schließen des Fensterflügels 3. Beim Öffnen des Fensters 1 ist in umgekehrter Reihenfolge vorzugehen, d.h., zunächst ist das Öffnen des Fensterflügels 3 erforderlich, um dann anschließend den Fensterflügel 4 öffnen zu können. Letzteres ist nur dann möglich, wenn zuvor durch Betätigung eines Treibstangenantriebs 5 eine Entriegelung des unterschlagenen Fensterflügels 4 vorgenommen wurde. Es läßt sich mit dem Treibstangenantrieb 5 der Fensterflügel 4 am Fensterrahmen 2 festlegen. Hierzu werden von dem Treibstangenantrieb 5 gegenläufig bewegbare Treibstangen ein- bzw. ausgefahren, die mit entsprechenden Gegenelementen den Rahmenbauteilen 21 des Fensterrahmens 2 zusammenwirken. Das Vorhandensein von zwei Treibstangen ist für die Erfindung nicht notwendig. Für die vorliegende Erfindung reicht auch eine Treibstange 6 aus, um eine Verriegelung mit den Rahmenbauteilen 21 des Fensterflügels 4 zu erreichen.

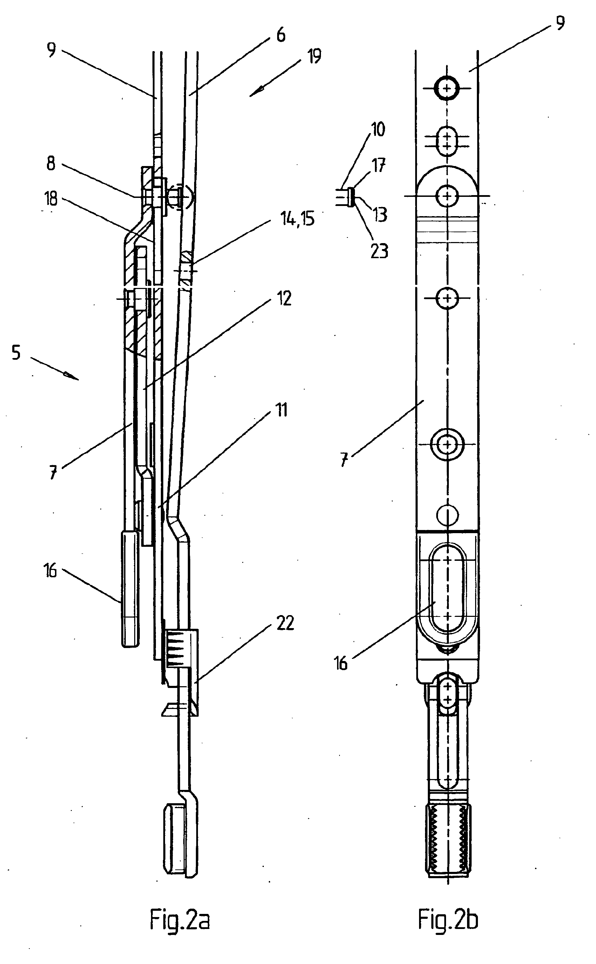

In der Fig. 2a ist der Treibstangenantrieb 5 näher dargestellt. Dabei weist der Treibstangenantrieb 5 einen einarmigen Betätigungshebel 7 auf, dessen Schwenkachse 8 senkrecht zur Stulpschiene 9 verläuft und auf der Außenseite der Stulpschiene 9 vorgesehen ist. An der Schwenkachse 8 des Betätigungshebels 7 ist ein Kupplungszapfen 10 mit dem Betätigungshebel 7 verbunden. Ein weiterer Kupplungszapfen 11 greift an einem Lenker 12 an, der mit Abstand von der Schwenkachse 8 des Betätigungshebels 7 an diesem angelenkt ist, wobei der Betätigungshebel 7 in Verbindung mit dem Kupplungszapfen 10 in der Stulpschiene 9 kongruenten Lage sich in einer Außereingriffposition mit der Treibstange 6 befindet. Die Außereingriffposition zeigt nach Fig. 2a, dass der Kupplungszapfen 10 auf der Treibstange 6 und zwar auf der Seite zur Stulpschiene 9 hinweisend aufliegt und somit in keiner formschlüssigen oder kraftschlüssigen Verbindung mit der Treibstange 6 steht. In einem tiefer liegenden Bereich der Beschlagaufnahmenut des unterschlagenen Fensterflügels 4, ist die bereits vorstehend erwähnte Treibstange 6 längsverschieblich geführt, d.h., sie befindet sich im Bereich der Unterseite der Stulpschiene 9. Gemäß der Fig. 2a zeigt sich, dass sich die Treibstange 6 in Richtung Nutgrund der Beschlagaufnahmenut im Bereich des Betätigungshebels 7 durch den Kupplungszapfen 10 auswölbt, so dass durch die elastische Verformung automatisch ein Kraftspeicher entsteht, der auf den Kupplungszapfen 10 und damit auf dem Betätigungshebel 7 bzw. den Kupplungszapfen 10 eine anhaltend konstante Dauerspannung aufbringt.

Des weiteren lässt sich die Federkraft, zum einen über die Länge des Kupplungszapfens 10 und/oder zum anderen über den Abstand ausgehend vom Kupplungszapfen 10 bis hin zu Führungsbauteilen 22, die eine Anbindung der Treibstange 6 zur Stulpschiene 9 bilden, entsprechend variieren. Das gleiche gilt aber auch für den Reibwiderstand der zwischen Kupplungszapfen 10 und flächenbündiger Auflage auf der Treibstange 6 entsteht. Je länger der Kupplungszapfen 10 ausgebildet ist, um so größer ist demzufolge die Dauerspannung und um so größer ist aber auch der Reibwiderstand. Ähnlich ist es bei der Anbindung der Treibstange 6 an die Stulpschiene 9 über die Führungsbauteile 22. Hier gilt, je kürzer der Abstand der Führungsbauteile 22 zum Kupplungszapfen 10, desto größer ist die Dauerspannung und desto größer ist auch der Reibwiderstand.

Da sich der Reibwiderstand nachhaltig auf die Erfindung auswirkt, ist die Kante 17, die an einem Kopf 23 am offenen Ende 13 des Kupplungszapfens 10 angeordnet ist, mittels einer Fase entgratet oder durch eine kugelförmige Ausbildung entsprechend abgerundet. Mit diesem Merkmal ist ebenfalls bevorteilt, dass der Kupplungszapfen 10 bei Eintritt in die Drehbereitschaftsendstellung des Treibstangenantriebs 5, d.h. wenn der Betätigungshebel 7 in die ausgeschwenkte Endstellung durch manuelle Betätigung gebracht ist, der Kupplungszapfen 10 leichter in die Mitnahmeverbindung 14 in Form einer Bohrung 15 der Treibstange 6 einkuppeln kann.

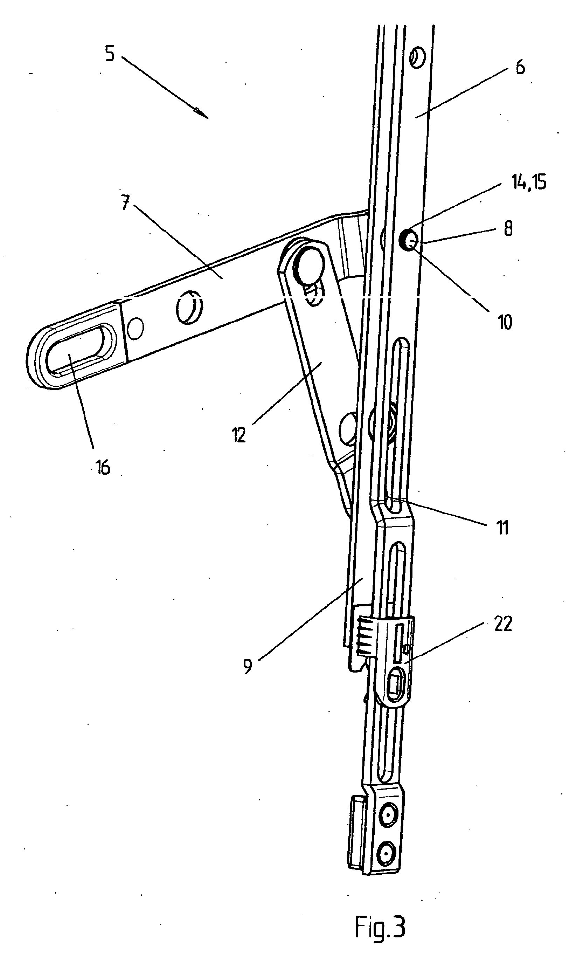

Die in Fig. 2a dargestellte Position des Treibstangenantriebs 5, stellt den vormontierten Zustand, d.h., den mittenfixierten, noch nicht betätigten, aber einbaufähigen Zustand dar. Die Lage des Kupplungszapfens 10 ändert sich dann, wenn der Betätigungshebel 7 durch manuelle Betätigung des Bedieners über einen dafür vorgesehenen Handhabungsabschnitt 16 ausgeschwenkt wird. Während des Schaltvorganges wird der Kupplungszapfen 10 in Richtung Mitnehmerverbindung 14 bewegt. Die Treibstange 6 hingegen bleibt während dessen unbetätigt in ihrer mittenfixierten Einbaulage. Sobald der Betätigungshebel 7 des Treibstangenantriebs 5 die Drehbereitschaftsendstellung gemäß der Fig. 3 erreicht hat, verändert sich zum einen die Lage des Kupplungszapfens 10 und die der Treibstange 6 in Richtung der Schwenkachse 8 aufgrund dessen, dass der Kupplungszapfen 10 formschlüssig in die Mitnahmeverbindung 14 d.h. in die Bohrung 15 der Treibstange 6 eingreift. In Folge dessen wird der Betätigungshebel 7, der Kupplungszapfen 10 und die Treibstange 6 federentlastet, wobei die Treibstange 6 ihre ausgewölbte Form verliert. D.h. aber auch, dass der Kupplungszapfen 10 aus seiner Außereingriffposition in eine formschlüssige Verbindung in Eingriff mit der Treibstange 6 des Treibstangenantriebs 5 und schließlich damit auch mit dem gekuppelten Treibstangenbeschlag 20 übergeht.

Um den Betätigungshebel 7 und damit den Treibstangenbeschlag 20 in seine Schließstellung zurückzuschwenken, erfolgt dies in umgekehrter Reihenfolge der Betätigung zum Öffnen des Fensterflügels 4. D.h., dass der Betätigungshebel 7 über den Handhabungsabschnitt 16 mittels Handbetätigung in Richtung der Stulpschiene 9 und damit des Fensterflügels 4 betätigt werden muss, um dann schließlich in die Verschlussposition gemäß der Fig. 2a, 2b überzugehen. Gleichzeitig setzt sich der am offenen Ende 13 des Kupplungszapfen 10 angeordnete Kopf 23 d. h. der Kopfüberstand durch die Krafteinleitung des Betätigungshebels 7 unter die von der Stulpschiene 9 abgewandte Seite und hält so durch einen Formschluss den Kupplungszapfen 10 während der Betätigung in einer nicht entkuppelbaren Verbindung mit der Treibstange 6.

Durch den umlaufenden Überstand des Kopfes 23 wirkt sich dieser Zustand sowohl beim Schließen als auch beim Öffnen des Treibstangenantriebs 5 gleichermaßen aus.
Da sich nun der Kupplungszapfen 10 gemäß nach Fig.3 in Eingriff mit der Treibstange 6 des Treibstangenantriebs 5 befindet, wird bei dieser Bewegung die Mittenfixierung des Treibstangenantriebs 5 und die des Treibstangenbeschlags 20 aufgehoben.

Bei weiteren Schaltvorgängen des Treibstangenantriebs 5 ist eine kontinuierliche Bewegung des Treibstangenbeschlags 20 ohne Aussetzung gegeben.

Wie aus den Fig. 2 bis 3 deutlich wird, ist der Betätigungshebel 7 und der Lenker 12 längssymmetrisch ausgebildet, so dass für die vereinfachte Einbau- bzw. Montagesituation eine Verwendung des Treibstangenantriebs 5 für rechts- und links verwendbare Fensterflügel einsetzbar ist.

### Bezugszeichenliste

- 1: Fenster
- 2: Fensterrahmen
- 3: Fensterflügel
- 4: Fensterflügel
- 5: Treibstangenantrieb
- 6: Treibstange
- 7: Betätigungshebel
- 8: Schwenkachse
- 9: Stulpschiene
- 10: Kupplungszapfen
- 11: Kupplungszapfen
- 12: Lenker
- 13: Offene Ende
- 14: Mitnahmeverbindung
- 15: Bohrung
- 16: Handhabungsabschnitt
- 17: Kante
- 18: Langloch
- 19: Mittenfixierte Montageposition
- 20: Treibstangenbeschlag
- 21: Rahmenbauteil
- 22: Führungsbauteil
- 23: Kopf

## Patentansprüche

1. Treibstangenbeschlag (20) für einen unterschlagenen Flügel eines zweiflügeligen, setzholzlosen Fensters oder Tür mit einem Treibstangenantrieb (5), bestehend aus einem um eine Schwenkachse (8) schwenkbaren Betätigungshebel (7), sowie aus einem im Abstand von der Schwenkachse (8) angeordneten Lenker (12), der einerends mit dem Betätigungshebel (7) und anderenends mit der Stulpschiene (9) des Treibstangenbeschlags (20) schwenkbar oder schwenkverschiebbar verbunden ist, und, mindestens aus einem verstellbaren, in einem Langloch (18) der Stulpschiene (9) geführten Kupplungszapfen (10), wobei eine Treibstange (6) des Treibstangenantriebs (5) eine Mitnahmeverbindung (14) für den Kupplungszapfen (10) aufweist,
**dadurch gekennzeichnet,**
**dass** sich der Kupplungszapfen (10) in einer ersten mittenfixierten Montageposition (19) des Treibstangenbeschlags (20) und damit des Treibstangenantriebs (5) in einer außer Eingriffposition mit der Mitnahmeverbindung (14) der Treibstange (6) des Treibstangenantriebs (5) befindet, wobei in der Montageposition (19) der in Verschlussstellung befindliche Betätigungshebel (7) in einer zur Stulpschiene (9) kongruenten Lage ausgerichtet ist und dass der Kupplungszapfen (10) bei einer ersten Betätigung über den Betätigungshebel (7) von der Verschlussstellung eine Drehbereitschaftsstellung selbsttätig mit der Mitnahmeverbindung (14) der Treibstange (6) gekuppelt wird.

2. Treibstangenbeschlag nach Anspruch 1,
**dadurch gekennzeichnet,**
**dass** die Mitnahmeverbindung (14) der Treibstange (6) eine Bohrung (15) ist.

3. Treibstangenbeschlag nach Anspruch 1 bis 2,
**dadurch gekennzeichnet,**
**dass** der Betätigungshebel (7) beim ersten Verschwenken, nach der Montage des Treibstangenbeschlags (20) in die Drehbereitschaftsstellung, einen Leerhub ausführt.

4. Treibstangenbeschlag nach einem der vorangehenden Ansprüche 1 bis 3,
**dadurch gekennzeichnet,**
**dass** der Kupplungszapfen (10) in der außer Eingriffposition auf der zur Stulpschiene (9) zugewandten Seite der Treibstange (6) angeordnet ist.

5. Treibstangenbeschlag nach Anspruch 1 bis 4,
**dadurch gekennzeichnet,**
**dass** der Treibstangenantrieb (5) in der in außer Eingriff befindlichen Position des Kupplungszapfen (10) Federkraftbeaufschlagt ist.

6. Treibstangenbeschlag nach Anspruch 5,
**dadurch gekennzeichnet,**
**dass** über die Länge des Kupplungszapfen (10) die Federwirkung, zum selbsttätigen Kuppeln in die Mitnahmeverbindung (14) der Treibstange (6), beeinflussbar ist.

7. Treibstangenbeschlag nach einem der vorangehenden Ansprüche 1 bis 6,
**dadurch gekennzeichnet,**
**dass** der Kupplungszapfen (10) an dem zur Treibstange (6) offenen Ende (13) einen Kopf (23) aufweist.

8. Treibstangenbeschlag nach Anspruch 7,
**dadurch gekennzeichnet,**
**dass** der Kopf (23) an der zur Treibstange (6) offene Ende (13) weisenden Kante (17) entgratet ist.

9. Treibstangenbeschlag nach einem der vorangehenden Ansprüche 1 bis 8,
**dadurch gekennzeichnet,**
**dass** beim ersten schließen des Betätigungshebels (7) aus der Drehbereitschaftsstellung in die Verschlussstellung die Treibstange (6) des Treibstangenantriebs (5) betätigbar ist und damit die Mittenfixierung des Treibstangenbeschlags (20) löst.

10. Treibstangenbeschlag nach Anspruch 9,
**dadurch gekennzeichnet,**
**dass** der Betätigungshebel (7) des Treibstangenantrieb (5) zum lösen der Verriegelung des Treibstangenbeschlags (20) von Rahmenbauteilen (21) der Fensterrahmens (2), nach dem zweiten Schaltvorgang um die Schwenkachse (8) in ein freies Betätigungsfeld der Drehbereitschaftsstellung verschwenkbar ist.

11. Verfahren zur automatischen oder teilautomatischen Montage eines Treibstangenbeschlags (20) eines unterschlagenen Flügels zweiflügeliger, setzholzloser Fenster oder Türen nach Anspruch 1 mit einem Treibstangenantrieb (5),
**gekennzeichnet durch** die Verfahrensschritte
a. Anschlagen des mittenfixierten Treibstangenbeschlags (20) und des mittenfixierten Treibstangenantriebs (5),
b. Anschlagen von Rahmenbauteilen (21) bei einheitlichem Sitz der Rahmenteile für den unterschlagenen Fensterflügel (4) gegenüber den Rahmenteilen des überschlagenen Fensterflügels (3),
c. Öffnen des Betätigungshebels (7) des Treibstangenantriebs (5) in die Drehbereitschaftsstellung bis der Kupplungszapfen (10) des Betätigungshebels (7) selbsttätig mit der Treibstange (6) kuppelt,
d. Schließen des Betätigungshebels (7) des Treibstangenantrieb (5) in die Verschlussstellung bei erster Betätigung des Treibstangenbeschlags (20) mit brechen der Mittenfixierung.

12. Verfahren nach Anspruch 11,
**dadurch gekennzeichnet,**
**dass** der Treibstangenantrieb (5) beim Einbau in den unterschlagenen Fensterflügel (4) mittenfixiert ist, wobei der Betätigungshebel (7) kongruent d. h. in Längsrichtung des Treibstangenbeschlags (20), somit also entkuppelt von der Treibstange (6) in Verschlussstellung, ausgerichtet ist.

## Claims

1. Drive rod fitting (20) for a lower sash of a double-sash, non-mullioned window or door having a drive rod drive mechanism (5), comprising an operating lever (7) pivoting about a swivel axis (8), and a guide arm (12), which is mounted at an interval from the swivel axis (8) and which is pivotally or swivel-connected at one end to the operating lever (7) and at the other end to the sleeve rail (9) of the drive rod fitting (20), and at least one adjustable coupling pin (10) carried in an elongated hole (18) in the sleeve rail (9), a drive rod (6) of the drive rod drive mechanism (5) having a driving connection (14) for the coupling pin (10), **characterized in that** the coupling pin (10) is situated in an initial centre-fixed mounting position (19) of the drive rod fitting (20) and hence of the drive rod drive mechanism (5) in a disengaged position with the driving connection (14) of the drive rod (6) of the drive rod drive mechanism (5), so that in the mounting position (19), the operating lever (7) situated in a closed position is oriented in a position congruent with the sleeve rail (9), and **in that** the coupling pin (10), on initial operation by the operating lever (7) from the closed position into a rotatable position, is automatically coupled to the driving connection (14) of the drive rod (6).

2. Drive rod fitting according to Claim 1, **characterized in that** the driving connection (14) of the drive rod (6) is a bore (15).

3. Drive rod fitting according to Claim 1 or 2, **characterized in that** the operating lever (7), on initial pivoting into the rotatable position after mounting of the drive rod fitting (20), performs an idle travel.

4. Drive rod fitting according to any one of the preceding Claims 1 to 3, **characterized in that** the coupling pin (10) in the disengaged position is arranged on the side of the drive rod (6) facing the sleeve rail (9).

5. Drive rod fitting according to Claim 1 to 4, **characterized in that** the drive rod drive mechanism (5) is acted upon by a spring force when the coupling pin (10) is in the disengaged position.

6. Drive rod fitting according to Claim 5, **characterized in that** the spring action can be influenced via the length of the coupling pin (10) for automatic coupling into the driving connection (14) of the drive rod (6).

7. Drive rod fitting according to any one of the preceding Claims 1 to 6, **characterized in that** the coupling pin (10) has a head (23) at the end (13) open to the drive rod (6).

8. Drive rod fitting according to Claim 7, **characterized in that** the head (23) is deburred at the edge (17) presenting an open end (13) to the drive rod (6).

9. Drive rod fitting according to any one of the preceding Claims 1 to 8, **characterized in that** on initial closing of the operating lever (7) from the rotatable position into the closed position, the drive rod (6) of the drive rod drive mechanism (5) can be operated and thereby releases the centre fixing of the drive rod fitting (20).

10. Drive rod fitting according to Claim 9, **characterized in that** for releasing the locking mechanism of the drive rod fitting (20) from frame components (21) of the window frame (2), the operating lever (7) of the drive rod drive mechanism (5) can, following the second shift sequence, be pivoted about the swivel axis (8) into a free operating field of the rotatable position.

11. Method for the automated or semi-automated assembly of a drive rod fitting (20) of a lower sash of double-sash, non-mullioned windows or doors according to Claim 1, having a drive rod drive mechanism (5), **characterized by** the following steps in the method:
a. fixing of the centre-fixed drive rod fitting (20) and of the centre-fixed drive rod drive mechanism (5)
b. fixing of frame components (21) with uniform seating of the frame parts for the lower window sash (4) in relation to the frame parts of the upper window sash (3),
c. opening of the operating lever (7) of the drive rod drive mechanism (5) into the rotatable position until the coupling pin (10) of the operating lever (7) couples automatically with the drive rod (6)
d. closing of the operating lever (7) of the drive rod drive mechanism (5) into the closed position on initial operation of the drive rod fitting (20) with breaking of the centre fixing.

12. Method according to Claim 11, **characterized in that** the drive rod drive mechanism (5) is centre-fixed when fitting into the lower window sash (4), the operating lever (7) being oriented congruently, i.e. in the longitudinal direction of the drive rod fitting (20) and therefore being decoupled from the drive rod (6) in the closed position.

## Revendications

1. Crémone (20) pour le battant semi-fixe d'une fenêtre ou porte à deux battants sans montant central avec un entraînement à bielle (5), consistant en un levier de manoeuvre (7) oscillant autour d'un axe de pivotement (8), ainsi qu'en un bras oscillant (12) agencé à distance de l'axe de pivotement (8), lequel est relié à une extrémité, au levier de manoeuvre (7) et à l'autre extrémité, au rail (9) de la crémone (20), avec possibilité d'oscillation, et au moins en un pivot d'accouplement (10) réglable, inséré dans un orifice longitudinal (18) du rail (9), où une bielle (6) de l'entraînement à bielle (5) présente une liaison d'accrochage (14) pour le pivot d'accouplement (10), **caractérisé en ce que** le pivot d'accouplement (10) se trouve dans une première position de montage (19) fixe centrale de la crémone (20) et ainsi, l'entraînement à bielle (5) se trouve dans une position externe d'engrènement avec liaison d'accrochage (14) de la bielle (6) de l'entraînement à bielle (5), où dans la position de montage (19), le levier de manoeuvre (7) se trouvant en position de fermeture, est orienté en une position congruente au rail et **en ce que** le pivot d'accouplement (10) est couplé lors d'une première manoeuvre par le levier de manoeuvre (7) en position de fermeture, dans une position d'attente automatiquement à la liaison d'accrochage (14) de la bielle (6).

2. Crémone selon la revendication 1, **caractérisée en ce que** la liaison d'accrochage (14) de la bielle (6) est un forage.

3. Crémone selon la revendication 1 ou 2, **caractérisée en ce que** le levier de manoeuvre (7) réalise une course à vide lors de la première oscillation, après le montage de la crémone (20) en la position d'attente.

4. Crémone selon l'une des revendications 1 à 3, **caractérisée en ce que** le pivot d'accouplement (10) est agencé en la position externe d'engrènement, sur la face orientée vers le rail (9) de la bielle (6).

5. Crémone selon l'une des revendications 1 à 4, **caractérisée en ce que** l'entraînement de bielle (5) est sous influence élastique en la position externe d'engrènement du pivot d'accouplement (10).

6. Crémone selon la revendication 5, **caractérisée en ce que** par la longueur du pivot d'accouplement (10), l'action élastique pour le couplage automatique dans la liaison d'accrochage (14) de la bielle (6) peut être influencée.

7. Crémone selon l'une des revendications 1 à 6, **caractérisée en ce que** le pivot d'accouplement (10) présente une tête (23) sur l'extrémité (13) ouverte de la bielle (6).

8. Crémone selon la revendication 7, **caractérisée en ce que** la tête (23) est ébarbée sur les bords (17) orientés vers l'extrémité ouverte (13) de la bielle (6).

9. Crémone selon l'une des revendications 1 à 8, **caractérisée en ce que** lors du premier glissement du levier de manoeuvre (7) depuis la position d'attente vers la position de fermeture, la bielle (6) de l'entraînement à bielle (5) peut être actionnée et ainsi, la fixation centrale de la crémone (20) se desserre.

10. Crémone selon la revendication 9, **caractérisée en ce que** le levier de manoeuvre (7) de l'entraînement à bielle (5) peut être oscillé pour ôter le verrouillage de la crémone (20) du cadre (21) du châssis (2), après la deuxième opération de couplage autour de l'axe de pivotement (8) dans un champ libre de manoeuvre de la position d'attente.

11. Procédé pour le montage automatique ou semi-automatique d'une crémone (20) pour le battant semi-fixe d'une fenêtre ou porte à deux battants sans montant central selon la revendication 1, avec un entraînement à bielle (5), **caractérisé par** les étapes de procédé
a. montage de la crémone (20) fixée centralement et de l'entraînement à bielle (5) fixé centralement,
b. montage du cadre 21 par ajustement standard du cadre pour le battant semi-fixe de fenêtre (4) par rapport au cadre du battant fixe (3) de fenêtre,
c. ouverture du levier de manoeuvre (7) de l'entraînement à bielle (5) en la position d'attente jusqu'à ce que le pivot de couplage (10) du levier de manoeuvre (7) est couplé automatiquement à la bielle (6),
d. fermeture du levier de manoeuvre (7) de l'entraînement à bielle (5) en la position de fermeture par la première manoeuvre de la crémone (20) avec cassure de la fixation centrale.

12. Procédé selon la revendication 11, **caractérisé en ce que** de l'entraînement à bielle (5) est fixé centralement lors du montage dans la battant de fenêtre (4) semi-fixe, où le levier de manoeuvre (7) est orienté de manière congruente, à savoir en direction longitudinale de la crémone (20), de manière également découplée de la bielle (6) en position de fermeture.
